# EUROPÄISCHE PATENTSCHRIFT

(11) **EP 1 732 334 B1**
(45) Veröffentlichungstag und Bekanntmachung des Hinweises auf die Patenterteilung: **19.03.2014**
(21) Anmeldenummer: 06114315.2
(22) Anmeldetag: 22.05.2006
(51) Int. Cl.: H04W 4/18, H04W 4/12

(54) **Vermittlungseinrichtung und Vermittlungsverfahren für Nachrichtenübermittlung über ein Telekommunikationsnetzwerk**
Switching arrangement and switching method for messaging over a telecommunication network
Dispositif de commutation et procédé de commutation pour messagerie sur un réseau de télécommunications

(30) Priorität: 10.06.2005 DE 102005027116
(43) Veröffentlichungstag der Anmeldung: 13.12.2006
(73) Patentinhaber: Vodafone Holding GmbH, 40213 Düsseldorf (DE)
(72) Erfinder: Lu, Yang, 40489 Düsseldorf (DE); Wild, Peter, 47807, Krefeld (DE); Kulakov, Alexej, 40227, Düsseldorf (DE)
(74) Vertreter: Ring & Weisbrodt

(56) Entgegenhaltungen:
- EP-A2- 0 821 536
- WO-A1-94/09599
- WO-A2-03/001770
- GB-A- 2 327 571
- US-B1- 6 721 574

## Beschreibung

### Technisches Gebiet

Die Erfindung betrifft eine Vermittlungseinrichtung zur Vermittlung von Nachrichten zwischen Endgeräten über ein Telekommunikationsnetz, wobei Mittel zum gleichzeitigen, parallelen Vermitteln von Nachrichten mit identischem Inhalt von einem Absenderendgerät an mehrere Empfängerendgeräte vorgesehen sind und die Vermittlungseinrichtung weiterhin alle Merkmale des Oberbegriffs des Anspruchs 1 umfasst. Ferner betrifft die Erfindung ein Vermittlungsverfahren zum Übermitteln von Nachrichten zwischen Endgeräten in einem Telekommunikationsnetz mit einer Vermittlungseinrichtung, wobei ein Absenderendgerät eine Nachricht versendet, welche durch die Vermittlungseinrichtung gleichzeitig und parallel an mehrere Empfängerendgeräte übermittelt wird und das Vermittlungsverfahren alle Merkmale des Oberbegriffs des Anspruchs 6 umfasst.

### Stand der Technik

Telekommunikationsnetze dienen nicht nur der Übermittlung von Sprache oder Bildinformationen, sondern auch zum Übermitteln von Textnachrichten. So können beispielsweise Nachrichten als E-Mail zwischen zwei Kommunikationspartnern über das Internet ausgetauscht werden. In Mobilfunknetzen hat sich mittlerweile das Versenden von kurzen Textnachrichten als Dienstleistung der Mobilfunkbetreiber etabliert. Solche Textnachrichten werden in Mobilfunknetzen häufig nach dem SMS-Standard (= Short Message Service) übermittelt. Dabei handelt es sich um eine Zeichenkette mit maximal 160 Zeichen.

In Fortbildung des SMS-Standards wurde der EMS- (= Enhanced Message Service) oder MMS-Standard (= Multimedia Message Service) entwickelt. Durch diese Standards können neben Textnachrichten auch Bilder, Filme, Töne oder Musikstücke übermittelt werden. Bisher ist es erforderlich, dass eine Nachricht, die mit demselben Inhalt an verschiedene Kommunikationspartner versendet werden soll, hintereinander an die verschiedenen Kommunikationspartner übermittelt wird.

Die GB 2 327 571 A beschreibt eine Vermittlungseinrichtung und ein entsprechendes Verfahren zur Vermittlung von Nachrichten als SMS zwischen Endgeräten über ein Mobilfunknetz. Dabei werden die Kurznachrichten mit identischem Inhalt von einem Absenderendgerät gleichzeitig und parallel an mehrere Empfängerendgeräte vermittelt.

Die WO 03/001770 A2 offenbart ein MMS-Kommunikationssystem, bei dem z.B. ein Bild für ein einzelnes mobiles Benutzergerät so konvertiert wird, dass es auf dem Bildschirmen des Benutzergeräts darstellbar ist.

In der EP 0 821 536 A2 wird ein System und ein Verfahren zum Vermitteln einer Nachricht von einem Absender über ein Kommunikationsnetz an mehrere Empfänger beschrieben. Die Nachricht enthält ein Datenfeld mit allen Empfängeradressen, an die die Nachricht übermittelt werden soll. Dabei können Empfängerendgeräte über ein Datennetz, ein Mobilfunknetz oder ein Festnetz erreichbar sein. Zusätzlich ist eine Konvertierung der Nachricht in ein für ein Empfängerendgerät festgelegtes Format möglich.

Die DE 696 32 101 T2 beschreibt beispielsweise ein solches Kommunikationssystem, bei dem Datenverarbeitungsmittel eine Textnachricht an ein oder mehrere entfernte mobile Endgeräte adressiert, um die Textnachricht an das eine oder mehrere entfernte mobile Endgeräte zu übertragen. Dabei werden die Textnachrichten an die Endgeräte nacheinander versendet.

### Offenbarung der Erfindung

Aufgabe der Erfindung ist es daher, eine Einrichtung bzw. ein Verfahren zu schaffen, bei dem Teilnehmer einer Gruppe von Empfängern gleichzeitig eine identische Nachricht erhalten können.

Erfindungsgemäß wird die Aufgabe durch eine Vermittlungseinrichtung mit den Merkmalen des Anspruchs 1 gelöst.

Bisher war es nur möglich, dass die Vermittlungseinrichtung für die Versendung von Nachrichten, die Nachrichten nur hintereinander an die Empfänger vermittelte. Durch die erfindungsgemäße Vermittlungseinrichtung ist es nunmehr möglich, eine einzige Nachricht von einem Absender gleichzeitig an mehrere, verschiedene Empfänger zu versenden.

Weiterhin wird die Aufgabe durch ein zur Vermittlungseinrichtung entsprechendes Vermittlungsverfahren mit den Merkmalen des Anspruchs 6 gelöst. Durch das erfindungsgemäße Verfahren wird eine Nachricht von einem Absender gleichzeitig und parallel an mehrere verschiedene Empfänger vermittelt.

In einer vorteilhaften Ausgestaltung der erfindungsgemäßen Vermittlungseinrichtung sind Computermittel zur Steuerung und Verwaltung der Vermittlung der Nachrichten über das Telekommunikationsnetz vorgesehen. Durch diese Maßnahme lassen sich die Verwaltungs- und Vermittlungsvorgänge automatisieren. Für die Vermittlung der Nachrichten muss sich kein Vermittler einschalten.

Eine bevorzugte Ausbildung der erfindungsgemäßen Vermittlungseinrichtung wird dadurch erzielt, dass Computermittel zur Steuerung und Verwaltung der Vermittlung der Nachrichten zentral im Telekommunikationsnetz angeordnet sind. Damit lässt sich die Vermittlungseinrichtung leicht organisieren und für ist Administratoren leicht zu verwalten.

Eine weitere vorteilhafte Ausgestaltung der erfindungsgemäßen Vermittlungseinrichtung ergibt sich dadurch, dass Mittel zur Bildung und/oder Änderung von wenigstens einer Empfängergruppe vorgesehen sind, an die die identischen Nachrichten von einem Absenderendgerät versendet werden. Durch diese Maßnahme kann für den Absender bei der Vermittlungseinrichtung eine Empfängergruppe gebildet werden, an die er eine Nachricht gleichzeitig übermitteln möchte.

Vorzugsweise verfügt das Absenderendgerät über Mittel zum Vornehmen von Änderungen und Festlegen der Empfängergruppe an der Vermittlungseinrichtung. Dadurch kann der Absender selbst die Empfängergruppe festlegen. Die Festlegung der Empfängergruppe kann beispielsweise auch unter Zuhilfenahme eines Telefonbuches, welches im Absenderendgerät oder auf einer SIM-Karte gespeichert ist, vorgenommen werden. Dabei werden wenigstens zwei Teilnehmer zur Bildung einer Empfängergruppe aus dem Telefonbuch an die Vermittlungseinrichtung gesendet.

Eine bevorzugte Ausbildung der erfindungsgemäßen Vermittlungseinrichtung zur Vermittlung von Nachrichten erhält man ferner, indem die Nachricht als SMS und/oder MMS ausgebildet ist. Diese Versendungsart für Nachrichten wird bevorzugt bei Mobilfunknetzen zum Einsatz kommen, da diese Formate dort standardisiert sind.

Häufiger wird von einem Absender eine Nachricht versendet, die ein Empfänger, wegen inkompatibler Formate, nicht empfangen und/oder lesen kann. Eine besondere Ausgestaltung der erfindungsgemäßen Vermittlungseinrichtung sieht daher Konvertierungsmittel zur Konvertierung der Nachricht in das jeweils passende Empfängerformat vor. Die Konvertierung erfolgt vorzugsweise automatisch. Hierzu muss die Vermittlungseinrichtung lediglich über die Information verfügen, welche Formate das Empfängerendgerät verarbeiten kann. Diese Information kann beispielsweise bei der Festlegung der Empfängergruppe mit übermittelt werden.

Eine bevorzugte Variante der erfindungsgemäßen Vermittlungseinrichtung erhält man durch Begrenzungsmittel zur Begrenzung der Anzahl der Empfängerendgeräte für Nachrichten mit identischem Inhalt von einem Absenderendgerät. Durch diese Maßnahme kann beispielsweise verhindert werden, dass Spam an eine unbestimmte Empfängergruppe versendet werden kann. Unter Spam versteht man üblicherweise Massen-E-Mail, häufig Werbesendung, die im Internet oder über das Mobilfunknetz als SMS bzw. MMS verbreitet wird. Diese Werbung wird unaufgefordert an Millionen von E-Mail-Adressen oder als SMS bzw. MMS an Telefonnummern versendet. Durch Spam-Mails entstehen jährlich Kosten in Milliardenhöhe. Diese Kosten werden verursacht durch die Übertragung und die Bearbeitung der E-Mails oder Abrufen von SMS.

Eine vorteilhafte Ausgestaltung des erfindungsgemäßen Vermittlungsverfahrens wird entsprechend zur Vermittlungsvorrichtungen dadurch erzielt, dass die Steuerung und Verwaltung der Vermittlung der Nachrichten über das Telekommunikationsnetz über einen Computer erfolgt. Durch diese Maßnahme lassen sich die Verwaltungs- und Vermittlungsvorgänge automatisieren. Für die Vermittlung der Nachrichten muss sich kein Vermittler einschalten.

Entsprechend zur Vermittlungsvorrichtung ist in einer bevorzugten Ausbildung des erfindungsgemäßen Vermittlungsverfahrens vorgesehen, dass wenigstens eine Empfängergruppe gebildet wird, an die die identischen Nachrichten von einem Absenderendgerät versendet werden. Dabei reicht es unter Umständen aus, dass nur ein Name oder eine Nummer für die Empfängergruppe angegeben werden muss, um alle Empfänger dieser Gruppe mit einer Nachricht gleichzeitig zu erreichen. Vorzugsweise kann die Empfängergruppe verändert werden. So können beispielsweise Teilnehmer zu der Empfängergruppe hinzugefügt oder gelöscht werden. Die Änderungen und/oder Festlegen der Empfängergruppe an der Vermittlungseinrichtung werden in einer bevorzugten Variante direkt über das Absenderendgerät vorgenommen. Damit kann der Absender auf einfache Weise aus der Ferne die Empfängergruppe für eine Nachricht definieren.

Vorzugsweise wird die Nachricht im Telekommunikationsnetz, welches insbesondere als Mobilfunknetz ausgebildet sein kann, als SMS und/oder MMS versendet. Hierbei handelt es sich um standardisierte Formate, die einfach zur Versendung von Nachrichten herangezogen werden kann.

Eine weitere bevorzugte Ausbildung des erfindungsgemäßen Vermittlungsverfahrens besteht darin, dass die Nachrichten in das jeweils passende Empfängerformat konvertiert werden. Eine Nachricht, die von einem Absenderendgerät in einem bestimmten Format versendet wurde, muss nicht unbedingt von einem Empfängerendgerät verarbeitet werden können. Dies liegt daran, dass die vom Absender übermittelten Formate nicht für das Empfängerendgerät kompatibel sind. Durch die Konvertierung kann nunmehr auch ein inkompatibles Format durch das Empfangsgerät verarbeitet werden.

Zur Verhinderung von "Spam" wird in einer bevorzugten Ausführung auch bei dem erfindungsgemäßen Verfahren die Anzahl der Zahl der Empfängerendgeräte für Nachrichten mit identischem Inhalt von einem Absenderendgerät begrenzt werden.

Weitere Vorteile ergeben sich aus dem Gegenstand der Unteransprüche, sowie der Zeichnung mit der dazugehörigen Beschreibung.

### Kurze Beschreibung der Zeichnung

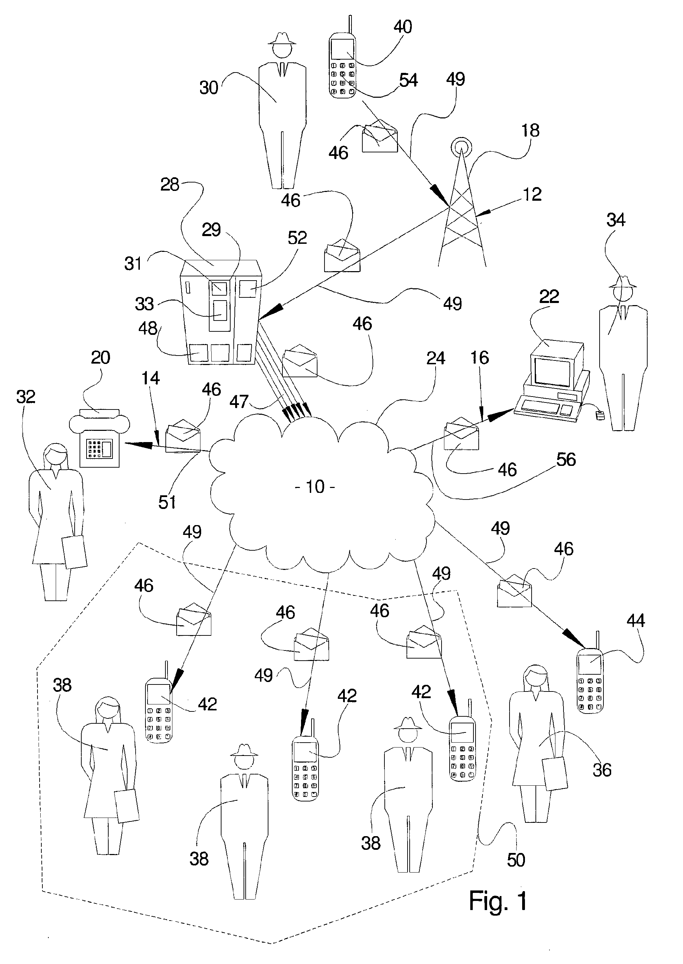

- Fig. 1: zeigt eine erfindungsgemäße Vermittlungseinrichtung zur gleichzeitigen, parallelen Vermittlung von Nachrichten mit identischem Inhalt von einem Absenderendgerät an mehrere Empfängerendgeräte

### Bevorzugtes Ausführungsbeispiel

In Fig. 1 wird mit 10 ein Telekommunikationsnetz bezeichnet. Das Telekommunikationsnetz 10 umfasst im vorliegenden Ausführungsbeispiel ein Mobilfunknetz 12, ein Festnetz 14 und Internet 16. Zur Verbildlichung ist das Mobilfunknetz 12 als Funkmast 18, das Festnetz 14 als Telefon 20 und das Internet 16 als PC (= Personal-Computer) 22 dargestellt. Mobilfunknetz 12, Festnetz 14 und Internet 16 bilden gemeinsam oder auch jeweils allein das Telekommunikationsnetz 10. Zur Vereinfachung ist das Telekommunikationsnetz 10 als Wolke 24 in der Abbildung dargestellt. Denn letztendlich sind die genannten Netze 12, 14, 16 miteinander über geeignete Schnittstellen verknüpft, so dass sie einen Telekommunikationsnetz 10 bilden, über welches Informationen jeglicher Art zwischen den Teilnehmern ausgetauscht werden können.

In dem Telekommunikationsnetz 10 ist zentral eine Vermittlungseinrichtung 28 integriert. Die Vermittlungseinrichtung 28 enthält vorzugsweise einen Computer 29, der insbesondere die Vermittlung von Nachrichten 46 verwaltet und überwacht. Der Computer 29 weist dazu geeignete Prozessor- 31 und Speichermittel 33 auf. In den Speichermitteln 33 des Computers 29 ist eine Datenbank abgelegt, die die erforderlichen Informationen zur Vermittlung, beispielsweise Absender- und Empfängeradresse enthalten.

Mit 30, 32, 34, 36 und 38 werden die Teilnehmer in den jeweiligen Netzen 12, 14, 16 bezeichnet. Der Teilnehmer 30 kommuniziert mit einem Mobilfunkendgerät 40, welches im Folgenden auch als Absenderendgerät bezeichnet wird, über das Mobilfunknetz 12 mit anderen Teilnehmern 32, 34, 36 und 38. Dabei ist beispielhaft der Teilnehmer 32 über das Telefon 20 mit dem Festnetz 14 und der Teilnehmer 34 über das Internet 16 mit dem Telekommunikationsnetz 10 verbunden. Die Teilnehmer 36, 38 sind jeweils mit einem Mobilfunkendgerät 42, 44 in das Telekommunikationsnetz 10 integriert. Die Mobilfunkendgeräte 42, 44, sowie das Telefon 20 und der PC 22 sind Empfängerendgeräte, die im vorliegenden Ausführungsbeispiel eine Nachricht 46 des Absenderendgeräts 40 empfangen.

Der Teilnehmer 30 kreiert mit seinem Absenderendgerät 40 die Nachricht 46. Die Nachricht 46 ist im vorliegenden Ausführungsbeispiel beispielhaft als SMS ausgebildet, da diese Form der Nachrichtenübermittlung in Mobilfunknetzen 12 standardisiert ist. Sie wird über das Mobilfunknetz 12 an die Vermittlungseinrichtung 28 unter Angabe eines oder mehrerer Empfänger übermittelt. Die Vermittlungseinrichtung 28 vermittelt nun gleichzeitig und parallel diese Nachricht 46 an alle angegebenen Empfängerendgeräte 20, 22, 42 und 44. Dabei muss jeweils jede Empfängeradresse angegeben werden. Die Empfängeradressen können manuell über Tastatur 54 des Absenderendgeräts 40 eingegeben und an die Vermittlungseinrichtung 28 gesendet werden. Alternativ können die Empfängeradressen dabei insbesondere auch aus dem digitalen Telefonbuch, welches im Absenderendgerät 40 oder auf dessen SIM-Karte gespeichert ist, abgerufen und verwendet werden. Die gleichzeitige und parallele Vermittlung der Nachricht 46 wird durch Pfeile 47 angedeutet. Pfeile 49 symbolisieren Verbindungen in dem Mobilfunknetz 12, Pfeil 51 eine Verbindung im Festnetz 14 und Pfeile 53 eine Verbindung im Internet.

Die Vermittlungseinrichtung 28 verfügt weiterhin über Konvertierungsmittel 48, die die Nachricht 46 in ein für die anderen Empfängerendgeräte 42, 44, 20, 22 verarbeitbare Formate umwandelt. Für einige Empfängerendgeräte 20, 22 muss nämlich eine Formatsanpassung der Nachricht 46 erfolgen, für andere Empfängerendgeräte 42, 44 ist dies nicht notwendig. Denn nicht alle Empfangsgeräte 20, 22 sind in der Lage das SMS-Format verarbeiten zu können. Die Konvertierungsmittel 48 der Vermittlungseinrichtung 28 konvertieren daher die Nachricht 46 beispielsweise von SMS nach E-Mail. Andere Formatkonvertierungen sind ebenfalls denkbar.

Der Teilnehmer 30 kann zur Vereinfachung eine Gruppe 50 von Teilnehmern 38 definieren, damit er nicht jede Empfängeradresse beim Versenden der Nachricht 46 angeben muss. Dazu übermittelt der Teilnehmer 30 der Vermittlungseinheit 28 die Empfängeradressen der Gruppenteilnehmer 38 an die Vermittlungseinrichtung 48. Die Vermittlungseinrichtung 28 speichert die Gruppe 50 als Empfängergruppe in der Datenbank unter einer einzigen Adresse ab. Im vorliegenden Ausführungsbeispiel ist die Gruppe 50 mit einer gestrichelten Linie gekennzeichnet. Der Teilnehmer 30 muss zum Versenden einer Nachricht 46 mit identischem Inhalt an diese Gruppe 50 dann nur noch eine einzige Adresse eingeben, um allen Teilnehmern 38 dieser Gruppe 50 diese Nachricht 46 gleichzeitig und parallel zu übermitteln. Die Vermittlungseinrichtung 28 ordnet anhand der Gruppeninformationen in der Datenbank der Vermittlungseinrichtung 28 den richtigen Empfänger zu.

Der Teilnehmer 30 kann die Gruppe 50 von seinem Absenderendgerät 40 beliebig festlegen und verändern, indem er mit seinem Absenderendgerät 40 veranlasst, dass Teilnehmer 38 in der Gruppe 50 hinzugefügt oder gelöscht werden. Dazu gibt er über Tastatur 54 entsprechende Angaben ein, welche an die Vermittlungseinrichtung 28 gesendet werden. Dort werden in der Datenbank geeignete Vermerke vorgenommen.

Zur Vermeidung von Missbrauch, beispielsweise durch Versendung von Spam, sind Begrenzungsmittel 52 in der Vermittlungseinrichtung 28 vorgesehen, die die Anzahl der Empfänger für den gleichzeitigen und parallelen Empfang der Nachricht 46 mit identischem Inhalt beschränken.

## Patentansprüche

1. Vermittlungseinrichtung (28) zur Vermittlung von Nachrichten (46) zwischen Endgeräten (40, 42, 44, 20, 22) über ein Telekommunikationsnetz (10), wobei Mittel zum gleichzeitigen, parallelen Vermitteln von Nachrichten (46) mit identischem Inhalt von einem Absenderendgerät (40) an mehrere Empfängerendgeräte (20, 22, 44), Mittel zur Bildung und/oder Änderung von wenigstens einer Empfängergruppe (50), an die die identischen Nachrichten (46) von einem Absenderendgerät (40) versendet werden, und Mittel zum Vornehmen von Änderungen und Festlegen der Empfängergruppe (50) an der Vermittlungseinrichtung (28) durch das Absenderendgerät (40) vorgesehen sind, und wobei das Telekommunikationsnetz (10) aus einem Mobilfunknetz (12), einem Festnetz (14) und Internet (16) gebildet wird und Konvertierungsmittel (48) zur Konvertierung der Nachricht (46) in das jeweils passende Empfängerformat vorgesehen sind, **dadurch gekennzeichnet, dass** die Vermittlungseinrichtung (28) zum Empfangen einer Information, welche Formate einer Nachricht (46) von einem Empfängerendgerät (20, 22, 44) verarbeiten werden können, zusammen mit der Festlegung der Empfängergruppe (50) durch das Absenderendgerät (40) ausgebildet ist.

2. Vermittlungseinrichtung (28) zur Vermittlung von Nachrichten (46) zwischen Endgeräten (40, 42, 44, 20, 22) über ein Telekommunikationsnetz (10) nach Anspruch 1, **dadurch gekennzeichnet, dass** Computermittel (29) zur Steuerung und Verwaltung der Vermittlung der Nachrichten (46) über das Telekommunikationsnetz (10) vorgesehen sind.

3. Vermittlungseinrichtung (28) zur Vermittlung von Nachrichten (46) zwischen Endgeräten (40, 42, 44, 20, 22) über ein Telekommunikationsnetz (10) nach Anspruch 2, **dadurch gekennzeichnet, dass** Computermittel (29) zur Steuerung und Verwaltung der Vermittlung der Nachrichten (46) zentral im Telekommunikationsnetz (10) angeordnet sind.

4. Vermittlungseinrichtung (28) zur Vermittlung von Nachrichten (46) zwischen Endgeräten (40, 42, 44, 20, 22) über ein Telekommunikationsnetz (10) nach einem der Ansprüche 1 bis 3, **dadurch gekennzeichnet, dass** die Nachricht (46) als SMS und/oder MMS ausgebildet ist.

5. Vermittlungseinrichtung (28) zur Vermittlung von Nachrichten (46) zwischen Endgeräten (40, 42, 44, 20, 22) über ein Telekommunikationsnetz (10) nach einem der Ansprüche 1 bis 4, **gekennzeichnet durch** Begrenzungsmittel (52) zur Begrenzung der Anzahl der Zahl der Empfängerendgeräte (20, 22, 42, 44) für Nachrichten (46) mit identischem Inhalt von einem Absenderendgerät (40).

6. Vermittlungsverfahren zum Übermitteln von Nachrichten (46) zwischen Endgeräten (40, 42, 44, 20, 22) in einem Telekommunikationsnetz (10) mit einer Vermittlungseinrichtung (28), wobei ein Absenderendgerät (40) eine Nachricht (46) versendet, welche durch die Vermittlungseinrichtung (28) gleichzeitig und parallel an mehrere Empfängerendgeräte (20, 22, 42, 44) übermittelt wird, wenigstens eine Empfängergruppe (50) gebildet wird, an die die identischen Nachrichten (46) von einem Absenderendgerät (40) versendet wird, und Änderungen und/oder Festlegen der Empfängergruppe (50) an der Vermittlungseinrichtung (28) über das Absenderendgerät (40) vorgenommen werden, und wobei das Telekommunikationsnetz (10) aus einem Mobilfunknetz (12), Festnetz (14) und dem Internet (16) gebildet wird und die Nachrichten (46) in das jeweils passende Empfängerformat konvertiert werden, **gekennzeichnet durch** Übermitteln von Informationen bezüglich der von einem Empfängerendgerät (20, 22, 42, 44) verarbeitbaren Formate einer Nachricht (46) an die Vermittlungseinrichtung (28) bei der Festlegung einer Empfängergruppe (50) **durch** das Absenderendgerät (40).

7. Vermittlungsverfahren zum Übermitteln von Nachrichten (46) zwischen Endgeräten (40, 42, 44, 20, 22) in einem Telekommunikationsnetz (10) nach Anspruch 6, **dadurch gekennzeichnet, dass** die Steuerung und Verwaltung der Vermittlung der Nachrichten über das Telekommunikationsnetz (10) über einen Computer erfolgt.

8. Vermittlungsverfahren zum Übermitteln von Nachrichten (46) zwischen Endgeräten (40, 42, 44, 20, 22) in einem Telekommunikationsnetz (10) nach einem der vorherigen Ansprüche 6 bis 7, **dadurch gekennzeichnet, dass** die Nachrichten als SMS und/oder MMS versendet werden.

9. Vermittlungsverfahren zum Übermitteln von Nachrichten zwischen Endgeräten (40, 42, 44, 20, 22) in einem Telekommunikationsnetz nach einem der vorherigen Ansprüche 6 bis 8, **dadurch gekennzeichnet, dass** die Anzahl der Zahl der Empfängerendgeräte (40, 42, 44, 20, 22) für Nachrichten (46) mit identischem Inhalt von einem Absenderendgerät (40) begrenzt wird.

## Claims

1. A switching equipment (28) for passing messages (46) between terminals (40, 42, 44, 20, 22) via a telecommunication network (10), wherein means for the simultaneous, parallel passing of messages (46) having an identical content from a sender terminal (40) to several receiver terminals (20, 22, 44), means for forming and/or modifying at least one receiver group (50) to which the identical messages (46) are sent from a sender terminal (40) and means for realizing modifications and determining the receiver group (50) in the switching equipment (28) by means of the sender terminal (40) are provided, and wherein the telecommunication network (10) is formed by a mobile radio network (12), a fixed telephone network (14) and the internet (16) and converting means (48) are provided for converting the message (46) into the respectively matching receiver format, **characterized in that** the switching equipment (28) is designed for receiving an information item, which reveals which formats of a message (46) can be processed by a receiver terminal (20, 22, 44), together with the determination of the receiver group (50) by means of the sender terminal (40).

2. A switching equipment (28) for passing messages (46) between terminals (40, 42, 44, 20, 22) via a telecommunication network (10) according to claim 1, **characterized in that** computer means (29) are provided for controlling and administrating the passing of messages (46) via the telecommunication network (10).

3. A switching equipment (28) for passing messages (46) between terminals (40, 42, 44, 20, 22) via a telecommunication network (10) according to claim 2, **characterized in that** computer means (29) for controlling and administrating the passing of messages (46) are centrally arranged in the telecommunication network (10).

4. A switching equipment (28) for passing messages (46) between terminals (40, 42, 44, 20, 22) via a telecommunication network (10) according to one of the claims 1 through 3, **characterized in that** the message (46) is an SMS and/or MMS.

5. A switching equipment (28) for passing messages (46) between terminals (40, 42, 44, 20, 22) via a telecommunication network (10) according to one of the claims 1 through 4, **characterized by** limiting means (52) for limiting the number of receiver terminals (20, 22, 42, 44) for receiving messages (46) having an identical content from a sender terminal (40).

6. A switching method for transmitting messages (46) between terminals (40, 42, 44, 20, 22) via a telecommunication network (10) by means of a switching equipment (28), wherein a sender terminal (40) sends a message (46) which will be transmitted simultaneously and in parallel to several receiver terminals (20, 22, 42, 44) by the switching equipment (28), at least one receiver group (50) is formed to which the identical messages (46) will be sent from a sender terminal (40) and modifications and/or determination of the receiver group (50) in the switching equipment (28) will be carried out by the sender terminal (40), and wherein the telecommunication network (10) is formed by a mobile radio network (12), a fixed telephone network (14) and the internet (16) and the messages (46) are converted into the respectively matching receiver format, **characterized by** the transmission of information with respect to the formats of a message (46) that can be processed by a receiver terminal (20, 22, 42, 44) to the switching equipment (28) during the determination of a receiver group (50) by means of the sender terminal (40).

7. A switching method for transmitting messages (46) between terminals (40, 42, 44, 20, 22) in a telecommunication network (10) according to claim 6, **characterized in that** the control and administration of the passing of the messages via the telecommunication network (10) is carried out by a computer.

8. A switching method for transmitting messages (46) between terminals (40, 42, 44, 20, 22) in a telecommunication network (10) according to one of the preceding claims 6 through 7, **characterized in that** the messages are sent as SMS and/or MMS.

9. A switching method for transmitting messages (46) between terminals (40, 42, 44, 20, 22) in a telecommunication network (10) according to one of the preceding claims 6 through 8, **characterized in that** the number of the receiver terminals (40, 42, 44, 20, 22) for receiving messages (46) having an identical content from a sender terminal (40) is limited.

## Revendications

1. Dispositif de commutation (28) pour faire passer des messages (46) entre des terminaux (40, 42, 44, 20, 22) via un réseau de télécommunication (10), dans lequel on prévoit des moyens pour faire passer simultanément et parallèlement des messages (46) ayant un contenu identique d'un terminal émetteur (40) à plusieurs terminaux récepteurs (20, 22, 44), des moyens pour former et/ou modifier au moins un groupe de récepteurs (50), auquel les messages (46) identiques sont envoyés par un terminal émetteur (40), et des moyens pour réaliser des modifications et déterminer le groupe de récepteurs (50) dans le dispositif de commutation (28) par moyen du terminal émetteur (40), et dans lequel le réseau de télécommunication (10) est formé par un réseau radio mobile (12), un réseau de téléphonie fixe (10) et l'internet (16), et des moyens de conversion (48) sont prévus pour convertir le message (46) au format récepteur respectivement approprié, **caractérisé en ce que** le dispositif de commutation (28) est configuré pour recevoir une information, qui révèle quels formats d'un message (46) peuvent être traités par un terminal récepteur (20, 22, 44), ensemble avec la détermination du groupe de récepteurs (50) par le terminal émetteur (40).

2. Dispositif de commutation (28) pour faire passer des messages (46) entre des terminaux (40, 42, 44, 20, 22) via un réseau de télécommunication (10) selon la revendication 1, **caractérisé en ce que** des moyens d'ordinateur (29) sont prévus pour commander et administrer le passage des messages (46) via le réseau de télécommunication (10).

3. Dispositif de commutation (28) pour faire passer des messages (46) entre des terminaux (40, 42, 44, 20, 22) via un réseau de télécommunication (10) selon la revendication 2, **caractérisé en ce que** des moyens d'ordinateur (29) pour commander et administrer le passage des messages (46) sont disposés au centre du réseau de télécommunication (10).

4. Dispositif de commutation (28) pour faire passer des messages (46) entre des terminaux (40, 42, 44, 20, 22) via un réseau de télécommunication (10) selon l'une des revendications 1 à 3, **caractérisé en ce que** le message (46) est un message SMS et/ou MMS.

5. Dispositif de commutation (28) pour faire passer des messages (46) entre des terminaux (40, 42, 44, 20, 22) via un réseau de télécommunication (10) selon l'une des revendications 1 à 4, **caractérisé par** des moyens de limitation (52) pour limiter le nombre des terminaux récepteurs (20, 22, 42, 44) destinés à recevoir des messages (46) ayant un contenu identique d'un terminal émetteur (40).

6. Procédé de commutation pour transmettre des messages (46) entre des terminaux (40, 42, 44, 20, 22) dans un réseau de télécommunication (10) à l'aide d'un dispositif de commutation (28), dans lequel un terminal émetteur (40) envoie un message (46) qui est transmis simultanément et parallèlement à plusieurs terminaux récepteurs (20, 22, 42, 44) par moyen du dispositif de commutation (28), au moins un groupe de récepteurs (50) est formé, auquel les messages identiques (46) sont envoyés par un terminal émetteur (40) et des modifications et/ou la détermination du groupe de récepteurs (50) dans le dispositif de commutation (28) sont réalisées par le terminal émetteur (40), et dans lequel le réseau de télécommunication (10) est formé par un réseau radio mobile (12), un réseau de téléphonie fixe (10) et l'internet (16) et les messages (46) sont convertis au format récepteur respectivement approprié, **caractérisé par** la transmission des informations par rapport aux formats d'un message (46) qu'un terminal récepteur (20, 22, 42, 44) peut traiter au dispositif de commutation (28) pendant la détermination d'un groupe de récepteurs (50) par moyen du terminal émetteur (40).

7. Procédé de commutation pour transmettre des messages (46) entre des terminaux (40, 42, 44, 20, 22) dans un réseau de télécommunication (10) selon la revendication 6, **caractérisé en ce que** la commande et l'administration du passage des messages via le réseau de télécommunication (10) se font par un ordinateur.

8. Procédé de commutation pour transmettre des messages (46) entre des terminaux (40, 42, 44, 20, 22) dans un réseau de télécommunication (10) selon l'une des revendications précédentes 6 à 7, **caractérisé en ce que** les messages sont envoyés comme SMS et/ou MMS.

9. Procédé de commutation pour transmettre des messages (46) entre des terminaux (40, 42, 44, 20, 22) dans un réseau de télécommunication (10) selon l'une des revendications précédentes 6 à 8, **caractérisé en ce que** le nombre des terminaux récepteurs (40, 42, 44, 20, 22) destinés à recevoir des messages (46) ayant un contenu identique d'un terminal émetteur (40) est limité.
